# FASCICULE DE BREVET EUROPEEN

(11) **EP 0 611 237 B1**
(45) Date de publication et mention de la délivrance du brevet: **28.05.1997**
(21) Numéro de dépôt: 94440008.4
(22) Date de dépôt: 04.02.1994
(51) Int. Cl.: A01B 73/06, A01B 21/08

(54) **Machine agricole de travail du sol, notamment pulvériseur, à largeur de transport réduite et dont les outils de travail du sol peuvent occuper plusieurs positions de travail**
Bodenbearbeitungsmaschine, insbesondere Scheibenegge, mit reduzierter Transportbreite, deren Bodenbearbeitungswerkzeugstellung verstellbar ist
Soil working machine, especially disc harrow, with reduced transport width and adjustable position of the working tool

(30) Priorité: 08.02.1993 FR 9301505
(43) Date de publication de la demande: 17.08.1994
(73) Titulaire: KUHN-HUARD S.A., 44110 Chateaubriant (FR)
(72) Inventeur: Girard, Jean-Pierre, F-79100 Thouars (FR)
(74) Mandataire: Andres, Jean-Claude

(56) Documents cités:
- AU-D- 1 045 392
- DE-U- 9 206 089
- FR-A- 2 342 013
- FR-A- 2 662 898
- US-A- 1 620 066
- US-A- 3 918 529
- :Prospectus "Pulvérisateurs offset traînés autoporteurs GALUCHO modèle GAVR"

## Description

La présente invention concerne une machine agricole de travail du sol comportant :
- un châssis avec un bâti,
- un dispositif de liaison servant à lier ledit châssis à un véhicule moteur,
- une paire de structures porteuses supportant chacune un groupe d'outils de travail du sol et liées chacune audit châssis au moyen d'une articulation respective d'axe de pivotement dirigé vers le haut, de sorte que lesdites structures porteuses puissent être pivotées autour de leur axe de pivotement respectif d'une position de transport dans laquelle ladite machine agricole de travail du sol présente une largeur de transport réduite, dans une position de travail dans laquelle les groupes d'outils de travail du sol de ladite paire de structures porteuses s'étendent bout à bout et longitudinalement dans le prolongement l'un de l'autre, et vice versa.

Il est connu dans l'état de la technique (**DE-U 92 06 089**) un pulvériseur qui comporte un corps et un timon d'attelage. Le corps comprend d'une part un châssis avec un bâti et des roues au moyen desquelles le bâti s'appuie sur le sol, et d'autre part quatre structures porteuses supportant chacune un groupe de disques bombés. Chaque structure porteuse est liée au bâti au moyen d'une liaison pivot d'axe vertical autorisant le pivotement de ladite structure porteuse et du groupe de disques bombés correspondant par rapport au bâti. De ce fait, chaque structure porteuse peut être pivotée autour dudit axe vertical d'une position de transport dans laquelle elle s'étend parallèlement à la direction de transport, dans une position de travail dans laquelle elle s'étend transversalement à la direction de travail et vice versa. Par ailleurs, du fait d'une implantation décalée desdites liaisons pivot les unes par rapport aux autres suivant la direction de travail, les structures porteuses et leurs groupes de disques bombés correspondants forment au travail un 〈〈 V 〉〉 dont chaque branche se compose de deux groupes de disques bombés s'étendant bout à bout et longitudinalement dans le prolongement l'un de l'autre. Ainsi, ce pulvériseur connu présente avantageusement au transport une largeur réduite, alors qu'au travail les groupes correspondants de disques bombés s'étendent bout à bout et longitudinalement dans le prolongement l'un de l'autre.

Ce pulvériseur connu présente toutefois l'inconvénient que les groupes correspondants de disques bombés ne peuvent occuper qu'une seule position de travail dans laquelle ils s'étendent bout à bout et longitudinalement dans le prolongement l'un de l'autre. Etant donné que dans les autres positions de travail - il est, en pratique, souhaité de pouvoir régler l'angle d'inclinaison des groupes d'outils de travail par rapport à la direction de travail pour pouvoir s'adapter à différentes conditions - les disques bombés centraux sont décalés les uns par rapport aux autres, la bande de terre centrale risque d'être mal travaillée.

Pour remédier à cet inconvénient, il est également connu dans l'état de la technique (prospectus 〈〈 **Pulvériseurs offset traînés autoporteurs GALUCHO, modèle GAVR** 〉〉 distribué au Salon International de la Machine Agricole à Paris en 1992, montrant toutes les caractéristiques du préambule de la revendication 1) un pulvériseur qui comporte également un corps et un timon d'attelage. Le corps comprend d'une part un châssis avec un bâti et des roues au moyen desquelles le bâti s'appuie sur le sol, et d'autre part quatre structures porteuses supportant chacune un groupe de disques bombés. Ces quatre structures porteuses sont réparties en deux paires de structures porteuses : une paire avant et une paire arrière formant entre elles un 〈〈 V 〉〉. Le châssis comporte par ailleurs deux bras de guidage : un bras de guidage avant supportant la paire avant de structures porteuses et un bras de guidage arrière supportant la paire arrière de structures porteuses. Chaque bras de guidage est lié, dans sa partie médiane, au bâti au moyen d'une articulation respective d'axe de pivotement dirigé vers le haut et les deux bras de guidage sont liés entre eux au moyen d'une barre articulée à chacune de ses extrémités sur un bras de guidage respectif. En outre, chaque structure porteuse de la paire avant est liée à une extrémité correspondante du bras de guidage avant au moyen d'une articulation respective d'axe dirigé vers le haut, et chaque structure porteuse de la paire arrière est liée à une extrémité correspondante du bras de guidage arrière au moyen d'une articulation d'axe de pivotement également dirigé vers le haut.

Ainsi, chaque structure porteuse et le groupe de disques bombés qu'elle supporte, peut être pivotée autour de l'axe de pivotement de son articulation d'une position de transport dans laquelle elle s'étend parallèlement à la direction de transport, dans une position de travail dans laquelle elle s'étend transversalement à la direction de travail, et vice versa. Au transport, ce pulvériseur connu présente donc également une largeur réduite, alors qu'au travail les groupes correspondants de disques bombés s'étendent bout à bout et longitudinalement dans le prolongement l'un de l'autre.

Comme, de surcroît, chaque paire de structures porteuses est liée à un bras de guidage correspondant, chaque paire de structures porteuses peut occuper plusieurs positions de travail dans lesquelles les groupes de disques bombés s'étendent au moins sensiblement bout à bout et au moins sensiblement longitudinalement dans le prolongement l'un de l'autre.

Pour arriver à ce résultat, chaque bras de guidage comporte cependant trois articulations : l'articulation centrale au moyen de laquelle il est lié au bâti et une articulation à chacune de ses extrémités pour supporter la structure porteuse correspondante. Ceci renchérit la machine et, de manière évidente, rend plus fastidieux l'entretien de celle-ci puisque les articulations liant les bras de guidage au bâti constituent des endroits supplémentaires nécessitant une attention particulière au niveau du graissage.

Le but de la présente invention est de remédier à cet inconvénient tout en conservant les avantages de la machine connue, à savoir largeur de transport réduite et possibilité pour les groupes d'outils de travail du sol de chaque paire de structures porteuses de s'étendre au moins sensiblement bout à bout et au moins sensiblement longitudinalement dans le prolongement l'un de l'autre dans plusieurs positions de travail.

A cet effet, la machine agricole de travail du sol selon la présente invention, qui comporte :
- un châssis avec un bâti et un bras de guidage lié au bâti au moyen d'une articulation d'axe de pivotement dirigé vers le haut,
- un dispositif de liaison servant à lier ledit châssis à un véhicule moteur,
- une paire de structures porteuses supportant chacune un groupe d'outils de travail du sol et liées chacune audit châssis au moyen d'une articulation respective d'axe de pivotement dirigé vers le haut, l'une d'entre elles étant plus précisément liée audit bras de guidage au moyen de son articulation respective, de sorte que lesdites structures porteuses puissent être pivotées autour de leur axe de pivotement respectif d'une position de transport dans laquelle ladite machine agricole de travail du sol présente une largeur de transport réduite, dans une position de travail dans laquelle les groupes d'outils de travail du sol de ladite paire de structures porteuses sétendent bout à bout et longitudinalement dans le prolongement l'un de l'autre, et vice versa,
est caractérisée en ce que :
- l'autre structure porteuse de ladite paire de structures porteuses est liée au bâti au moyen de son articulation respective, et
- l'axe de pivotement de l'articulation liant le bras de guidage au bâti est confondu avec l'axe de pivotement de ladite articulation liant l'autre structure porteuse audit bâti.

Dans la machine agricole de travail du sol selon la présente invention, les structures porteuses de la paire peuvent donc également occuper plusieurs positions de travail dans lesquelles les groupes d'outils de travail du sol correspondants s'étendent au moins sensiblement bout à bout et au moins sensiblement longitudinalement dans le prolongement l'un de l'autre, bien qu'il n'y ait que deux articulations par bras de guidage.

La machine agricole de travail du sol selon la présente invention pourra encore comporter les caractéristiques suivantes considérées dans toutes leurs combinaisons techniquement possibles :
a) les deux structures porteuses de ladite paire peuvent être pivotées par rapport au bras de guidage autour de l'axe de pivotement de leur articulation respective, au moyen d'au moins un élément de mise en position commandé depuis le véhicule moteur ;
b) le pivotement des deux structures porteuses de ladite paire autour de l'axe de pivotement de leur articulation respective s'effectue au moyen d'un seul élément de mise en position ; cet élément de mise en position peut être un vérin hydraulique à simple tige ou à double tige implanté entre les deux structures porteuses ;
c) le bras de guidage peut être pivoté par rapport au bâti autour de son axe de pivotement d'une position de transport dans une position de travail et vice versa, au moyen d'au moins un organe de manoeuvre commandé depuis le véhicule moteur ;
d)
   - le châssis comporte un bras de guidage supplémentaire lié au bâti au moyen d'une articulation d'axe de pivotement dirigé vers le haut, et
   - elle comporte également une paire de structures porteuses supplémentaires supportant chacune un groupe d'outils de travail du sol, dont l'une est liée audit bras de guidage supplémentaire au moyen d'une articulation respective d'axe de pivotement dirigé vers le haut et dont l'autre est liée au bâti du châssis au moyen d'une articulation respective d'axe de pivotement également dirigé vers le haut et confondu avec l'axe de pivotement de l'articulation liant le bras de guidage supplémentaire au bâti, de sorte que lesdites structures porteuses supplémentaires puissent être pivotées autour de leur axe de pivotement respectif d'une position de transport dans laquelle ladite machine agricole de travail du sol présente une largeur de transport réduite, dans une position de travail dans laquelle les groupes d'outils de travail du sol de ladite paire de structures porteuses supplémentaires s'étendent bout à bout et longitudinalement dans le prolongement l'un de l'autre, et vice versa, ladite paire de structures porteuses supplémentaires étant décalée, suivant la direction d'avance au travail, par rapport à la première paire de structures porteuses ;
e) les deux structures porteuses supplémentaires de ladite paire supplémentaire peuvent être pivotées par rapport au bras de guidage supplémentaire autour de l'axe de pivotement de leur articulation respective au moyen d'au moins un élément de mise en position commandé depuis le véhicule moteur ;
f) le pivotement des deux structures porteuses supplémentaires de ladite paire supplémentaire autour de l'axe de pivotement de leur articulation respective s'effectue au moyen d'un seul élément de mise en position ; cet élément de mise en position peut être un vérin hydraulique à simple tige ou à double tige implanté entre les deux structures porteuses supplémentaires ;
g) le bras de guidage supplémentaire peut être pivoté par rapport au bâti autour de son axe de pivotement d'une position de transport dans une position de travail et vice versa, au moyen d'au moins un organe de manoeuvre commandé depuis le véhicule moteur ;
h) l'organe de manoeuvre est implanté entre le bras de guidage et le bâti, et un élément de manoeuvre s'étend entre ledit bras de guidage et le bras de guidage supplémentaire, ou vice versa ;
i) la longueur de l'élément de manoeuvre est réglable ;
j) les groupes d'outils de travail du sol de chaque structure porteuse et, le cas échéant, de chaque structure porteuse supplémentaire comportent un arbre central muni de disques bombés ;
k) dans leur position de transport, les structures porteuses et, le cas échéant, les structures porteuses supplémentaires s'étendent au moins sensiblement suivant la direction de transport ;
l) c'est un pulvériseur ;
m) c'est un pulvériseur en 〈〈 V 〉〉.

D'autres caractéristiques de l'invention apparaissent dans la description suivante d'un exemple non limitatif de réalisation de l'invention faite en référence au dessin annexé sur lequel :
- la figure 1 représente une vue de dessus d'une machine agricole de travail du sol selon l'invention, attelée à un véhicule moteur et placée dans sa position de transport ;
- la figure 2 représente une vue de dessus de la machine agricole de travail du sol de la figure 1, placée dans une position de travail.

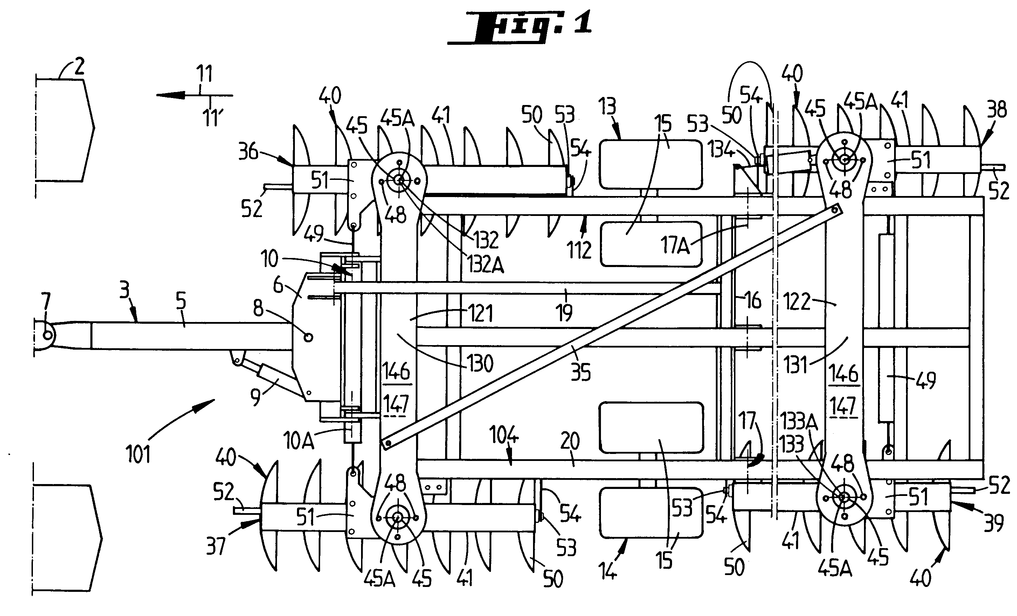

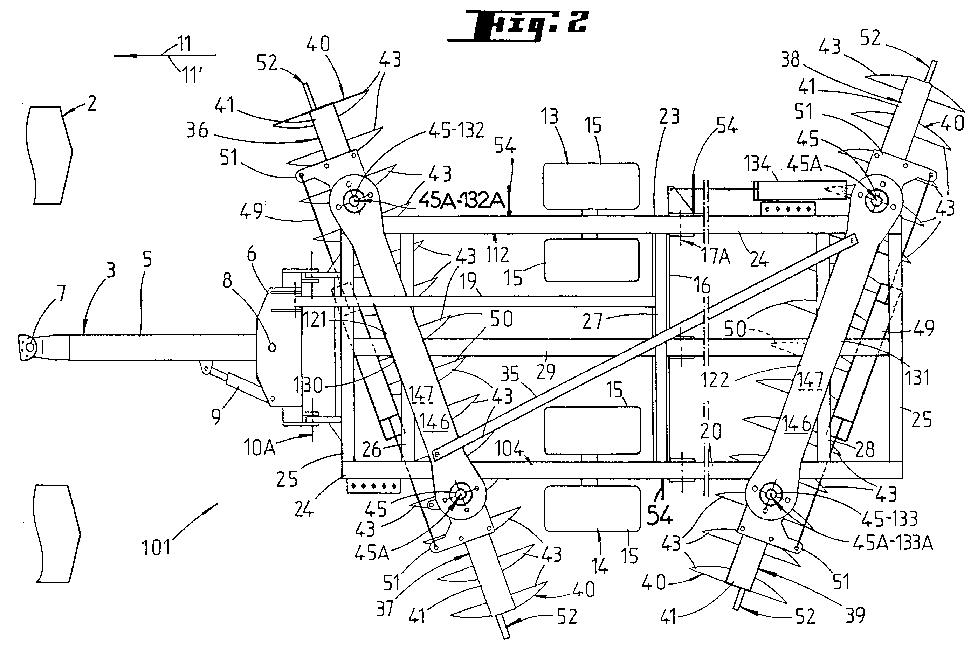

Sur les figures 1 et 2 est représenté un pulvériseur (101) selon l'invention. Celui-ci est lié à l'attelage arrière d'un tracteur agricole (2).

Le pulvériseur (101) comporte un timon (3) et un corps (104). Le timon (3) se compose d'un timon primaire (5) destiné à être lié à l'attelage arrière du tracteur agricole (2), et d'un timon secondaire (6) articulé au corps (104) du pulvériseur (101). Le timon primaire (5) est lié à l'attelage arrière du tracteur (2) au moyen d'une articulation (7) d'axe dirigé vers le haut autorisant le pivotement dudit timon primaire (5) autour dudit axe. A son extrémité arrière, le timon primaire (5) est lié à l'extrémité frontale du timon secondaire (6) à l'aide d'une première liaison pivot (8) d'axe de pivotement dirigé vers le haut. La position angulaire du timon primaire (5) par rapport au timon secondaire (6) et au corps (104) peut être modifiée en faisant pivoter le timon primaire (5) autour de l'axe de pivotement de la première liaison pivot (8). La mise dans la position angulaire souhaitée et le maintien dans celle-ci sont réalisés par un vérin de positionnement (9) implanté entre le timon primaire (5) et le timon secondaire (6).

Près de son extrémité arrière, le timon secondaire (6) est lié au corps (104) au moyen d'une deuxième liaison pivot (10) d'axe de pivotement (10A) au moins sensiblement horizontal et orthogonal à la direction de travail (11) du pulvériseur (101). Cette deuxième liaison pivot (10) permet au corps (104) de s'adapter au relief du sol par pivotement autour dudit axe de pivotement (10A).

Le corps (104) du pulvériseur (101) comporte un châssis (112) qui s'appuie sur le sol - au transport notamment - au moyen de deux paires (13, 14) de roues (15) implantées au moins sensiblement sous la partie centrale du châssis (112). Préférentiellement, les axes de roulement des roues (15) sont au moins sensiblement confondus. Les deux paires (13, 14) de roues (15) sont liées à un double-bras de roues (16) lui-même lié au châssis (112) au moyen d'une troisième liaison pivot (17) d'axe de pivotement (17A) au moins sensiblement parallèle à l'axe de pivotement (10A) de la deuxième liaison pivot (10). Entre le double-bras de roues (16) et le châssis (112) s'étend un vérin de relevage (non représenté) permettant de pivoter aisément les roues (15) autour de l'axe de pivotement (17A) de la troisième liaison pivot (17). Ce faisant, le châssis (112) peut être déplacé en hauteur de la position de transport dans la position de travail désirée ou vice versa. Le châssis (112) est également maintenu dans sa position de travail ou de transport au moyen dudit vérin de relevage.

Entre le corps (104) et le timon secondaire (6) s'étend, par ailleurs, un organe de stabilisation (19). Durant le travail et au transport, cet organe de stabilisation (19), connu de l'homme de l'art, sert à ramener et à maintenir de manière élastique le corps (104) dans une position au moins sensiblement horizontale.

Le châssis (112), quant à lui, comporte pour l'essentiel un bâti (20) et deux bras de guidage (121, 122). Le bâti (20) comporte un cadre (23) de forme rectangulaire, dont les grands côtés (24) s'étendent au moins sensiblement parallèlement à la direction de travail (11). Le cadre (23) se compose en fait de quatre longerons (24, 25) formant chacun un côté dudit cadre (23). A l'intérieur du cadre (23) sont prévues trois traverses (26, 27, 28) s'étendant au moins sensiblement parallèlement aux petits côtés (25) dudit cadre (23) et fixées rigidement à chaque grand côté (24) dudit cadre (23). La première (26) et la troisième (28) de ces traverses (26, 27, 28) sont implantées chacune dans le voisinage d'une extrémité longitudinale du cadre (23), tandis que la deuxième traverse (27) est implantée dans la partie médiane du cadre (23). C'est à la partie inférieure de la deuxième traverse (27) qu'est lié le double-bras de roues au moyen de ladite troisième liaison pivot (17). En outre, à l'intérieur du cadre (23) sont encore implantées quatre poutres (29) successives s'étendant dans la partie centrale du cadre (23) au moins sensiblement parallèlement aux grands côtés (24) dudit cadre (23) et reliant les traverses (26, 27, 28) et les petits côtés (25) du cadre (23) entre eux. Un tel agencement permet d'obtenir un bâti (20) particulièrement rigide.

Chaque bras de guidage (121, 122) est articulé au bâti (20) au moyen d'une articulation respective (132, 133) d'axe de pivotement (132A, 133A) dirigé vers le haut. La position angulaire des bras de guidage (121, 122) par rapport au bâti (20) peut être modifiée en faisant pivoter les bras de guidage (121, 122) autour de leur axe de pivotement (132A, 133A) respectif. La mise dans la position angulaire souhaitée et le maintien dans celle-ci sont réalisés à l'aide d'un vérin de manoeuvre (134) implanté entre l'un (122) des bras de guidage (121, 122) et le bâti (20). Une tringle (35), articulée, à chacune de ses extrémités, à l'un respectif des bras de guidage (121, 122), sert à transmettre l'action du vérin de manoeuvre (134) de l'un (122) des bras de guidage (121, 122) à l'autre bras de guidage (121). Avantageusement, cette tringle (35) pourrait être remplacée par au moins un vérin afin de faire varier aisément la position des outils de travail du sol (40) supportés par l'un (121) des bras de guidage (121, 122) par rapport à la position des outils de travail du sol (40) supportés par l'autre bras de guidage (122).

Le corps (104) du pulvériseur (101) comporte également quatre structures porteuses (36, 37, 38, 39) supportant chacune des outils de travail du sol (40). Chaque structure porteuse (36, 37, 38, 39) comporte une poutre support (41) munie, dans le voisinage de chacune de ses extrémités longitudinales, d'une paroi latérale (non représentée) s'étendant vers le bas. Les outils de travail du sol (40) correspondants, quant à eux, se composent de disques bombés (43, 50) dont la périphérie de certains d'entre eux peut être crénelée et qui sont liés rigidement à un arbre central respectif (non représenté) guidé en rotation dans les extrémités inférieures des deux parois latérales correspondantes. Ces dernières sont agencées respectivement entre les deux premiers disques bombés (43) et les deux derniers disques bombés (43, 50) correspondants.

Préférentiellement, les disques bombés (43, 50) sont liés de manière équidistante à l'arbre central correspondant et leur concavité est dirigée dans le même sens au cours du travail. Dans sa position de travail, l'arbre central s'étend obliquement par rapport à la direction de travail (11) et la concavité des disques bombés (43, 50) est dirigée vers l'avant. Par ailleurs, derrière l'arbre central, vu par rapport au sens d'avance (11) au travail, il peut être prévu d'implanter une pluralité d'outils de nettoyage (non représentés) s'étendant jusqu'entre les disques bombés (43, 50). Ces outils de nettoyage sont fixés à une rampe (non représentée) montée de manière amovible sur la poutre support (41) de chaque structure porteuse (36, 37, 38, 39). Chaque poutre support (41) est liée, dans sa partie centrale, au châssis (112) au moyen d'une articulation correspondante (45) d'axe de pivotement (45A) dirigé vers le haut. Plus précisément, la poutre support (41) de l'une (36) des structures porteuses (36, 37) avant est liée au bâti (20) au moyen de l'articulation (45) respective dont l'axe de pivotement (45A) est confondu avec l'axe de pivotement (132A) du bras de guidage (121) avant, tandis que la poutre support (41) de l'autre structure porteuse avant (37) est liée audit bras de guidage avant (121) au moyen de l'articulation (45) respective. De même, la poutre support (41) de l'une (39) des structures porteuses (38, 39) arrière est liée au bâti (20) au moyen de l'articulation (45) respective dont l'axe de pivotement (45A) est confondu avec l'axe de pivotement (133A) du bras de guidage (122) arrière, tandis que la poutre support (41) de l'autre structure porteuse arrière (38) est liée audit bras de guidage arrière (122) au moyen de l'articulation (45) respective. Dans l'exemple représenté, l'axe de pivotement (132A) de l'articulation (132) du bras de guidage avant (121) est confondu avec l'axe de pivotement (45A) de l'articulation (45) de la structure porteuse avant droite (36) (machine vue de l'arrière dans le sens d'avance (11) au travail) et l'axe de pivotement (133A) de l'articulation (133) du bras de guidage arrière (122) est confondu avec l'axe de pivotement (45A) de l'articulation (45) de la structure porteuse arrière gauche (39) (machine vue de l'arrière dans le sens d'avance (11) au travail).

Du reste, l'axe de pivotement (45A) de l'articulation (45) de chaque structure porteuse (36, 37, 38, 39) coupe au moins sensiblement l'axe longitudinal de l'arbre central correspondant.

Dans l'exemple représenté, on remarquera en outre que les axes (45A) et les axes (132A, 133A) s'étendent au moins sensiblement verticalement. De plus, les articulations (45) des structures porteuses (36, 37, 38, 39) sont implantées à l'extérieur du cadre (23) du bâti (20), mais dans le voisinage des grands côtés (24) dudit cadre (23). A cet égard, il faut observer que lesdites articulations (45) et les articulations (132, 133) liant les bras de guidage (121, 122) au bâti (20) sont implantées à la même hauteur que le cadre (23) du bâti (20). En effet, chaque bras de guidage (121, 122) comporte une partie supérieure (146) s'étendant juste au-dessus du bâti (20) et une partie inférieure (147) s'étendant juste en-dessous dudit bâti (20). La partie supérieure (146) et la partie inférieure (147) ont une épaisseur relativement faible et sont liées entre elles par l'intermédiaire d'une série d'entretoises (48) prévues dans le voisinage de l'articulation (45) et de l'articulation (132, 133) correspondantes et, si nécessaire, dans le voisinage de leur partie centrale (130, 131). Grâce à cet agencement, les structures porteuses (36, 37, 38, 39) peuvent s'étendre juste sous le bâti (20).

La position angulaire des structures porteuses (36, 37, 38, 39) par rapport aux bras de guidage correspondants (121, 122) peut être modifiée en faisant pivoter les structures porteuses (36, 37, 38, 39) autour de leur axe de pivotement (45A) respectif. La mise dans la position angulaire souhaitée et le maintien dans celle-ci sont réalisés au moyen d'un vérin de mise en position (49) respectif, du type à double tige par exemple, implanté entre les deux structures porteuses (36, 37, 38, 39) d'un même bras de guidage (121, 122). Chaque vérin de mise en position (49) s'étend sensiblement entre les parties médianes desdites structures porteuses (36, 37, 38, 39) et juste sous le bâti (20). De cette sorte, chaque vérin de mise en position (49) permet de pivoter les structures porteuses (36, 37, 38, 39) correspondantes d'une position de transport (figure 1) dans laquelle les disques bombés (43, 50) s'étendent au moins sensiblement orthogonalement au bras de guidage (121, 122) respectif, dans une position de travail (figure 2) dans laquelle les disques bombés (43, 50) de chaque bras de guidage (121, 122) s'étendent longitudinalement dans le prolongement les uns des autres. Avantageusement, les structures porteuses (36, 37, 38, 39) et les disques bombés (43, 50) sont dimensionnés de manière à ce que lesdits disques bombés (43, 50) s'étendent bout à bout dans leur position de travail. Dans l'exemple de réalisation représenté, les deux disques bombés intérieurs (50), en regard l'un de l'autre dans leur position de travail, sont espacés d'une distance au moins sensiblement identique à celle existant entre les autres disques bombés (43). Grâce à cet agencement, il n'y a aucune discontinuité entre les deux bandes de terre travaillées par les disques bombés (43, 50) supportés par des structures porteuses (36, 37, 38, 39) adjacentes.

Les disques bombés (50) destinés, dans leur position de travail, à venir en regard l'un de l'autre, s'étendent, au transport, dans le voisinage des roues (15). Grâce à un tel agencement, la longueur du corps (104) est minimale et des structures porteuses (36, 37, 38, 39) de longueurs variables peuvent être adaptées sur le même châssis (112) tout en conservant une longueur du corps (104) minimale.

Chaque structure porteuse (36, 37, 38, 39) comporte de surcroît un levier (51) auquel est articulée une extrémité longitudinale correspondante du vérin de mise en position (49) respectif, de sorte que ledit vérin de mise en position (49) puisse s'étendre au moins sensiblement parallèlement audit bras de guidage (121, 122).

Chaque structure porteuse (36, 37, 38, 39) comporte également un dispositif de verrouillage (52) servant à verrouiller, dans sa position de transport, ladite structure porteuse (36, 37, 38, 39) par rapport au bâti (20). A cet effet, le dispositif de verrouillage (52) comporte une tige (53) pouvant être translatée (suivant la direction de transport (11')), de sorte à traverser une pièce de verrouillage (54) prévue sur le bâti (20). De l'autre côté de la pièce de verrouillage (54), ladite tige (53) peut en sus recevoir une goupille (non représentée) évitant que ladite tige (53) ne sorte de la pièce de verrouillage (54) lors du transport. Dès lors, la rotation des structures porteuses (36, 37, 38, 39) autour de l'axe de pivotement (45A) de leur articulation (45) respective est en sus verrouillée mécaniquement et le transport peut s'effectuer en toute sécurité.

Ce pulvériseur (101) selon l'invention fonctionne de la manière suivante. Au transport, le corps (104) s'appuie sur le sol au moyen des roues (15) et le timon primaire (5) est maintenu en position par rapport au timon secondaire (6) à l'aide du vérin de positionnement (9). Par ailleurs, les bras de guidage (121, 122) s'étendent au moins sensiblement orthogonalement à la direction de transport (11') qui est identique à la direction de travail (11), et les structures porteuses (36, 37, 38, 39) sont immobilisées dans une direction au moins sensiblement parallèle à ladite direction de transport (11'). Avantageusement, les structures porteuses (36, 37, 38, 39) s'étendent au transport juste devant et derrière les roues (15). Etant donné que les structures porteuses (36, 37, 38, 39) s'étendent au moins sensiblement parallèlement à la direction de transport (11'), la largeur de transport est très réduite. L'organe de stabilisation (19) maintient, de manière élastique, le corps (104) dans une position au moins sensiblement horizontale et le pulvériseur (101) est susceptible de pivoter librement autour de l'articulation (7) liant le timon d'attelage (3) au tracteur (2). Lors des manoeuvres, l'utilisateur peut aussi faire pivoter le timon primaire (5) par rapport au timon secondaire (6) au moyen du vérin de positionnement (9). Le pulvériseur (101) est, de ce fait, particulièrement maniable au transport.

En vue du travail, l'utilisateur commence par déverrouiller chaque structure porteuse (36, 37, 38, 39) en agissant sur le dispositif de verrouillage (52). Ensuite, il commande, depuis le tracteur (2), l'alimentation des vérins de mise en position (49), de sorte à pivoter les structures porteuses (36, 37, 38, 39) autour des axes de pivotement (45A) des articulations (45), de leur position de transport (figure 1) dans laquelle les disques bombés (43, 50) s'étendent au moins sensiblement parallèlement à la direction de transport (11'), dans une position de travail (figure 2) dans laquelle les disques bombés (43, 50) de deux structures porteuses (36, 37, 38, 39) correspondantes, c'est-à-dire les deux structures porteuses (36, 37) de la paire avant et les deux structures porteuses (38, 39) de la paire arrière, s'étendent longitudinalement dans le prolongement les uns des autres. Deux butées (non représentées) fixées sur la partie inférieure (147) de chaque bras de guidage (121, 122), définissent la position de travail des structures porteuses (36, 37, 38, 39) correspondantes par rapport audit bras de guidage (121, 122). Dès que les structures porteuses (36, 37, 38, 39) arrivent en contact avec les butées correspondantes des bras de guidage (121, 122) respectifs, le vérin de mise en position (49) correspondant cesse de s'allonger. L'utilisateur commande alors l'alimentation du vérin de manoeuvre (34) servant à pivoter les bras de guidage (121, 122) autour de l'axe de pivotement (132A, 133A) de leur articulation (132, 133) correspondante. Ceci a pour effet de pivoter simultanément les deux bras de guidage (121, 122) et de placer les disques bombés (43, 50) en 〈〈 V 〉〉, de telle sorte que la concavité desdits disques bombés (43, 50) soit dirigée vers l'avant par rapport au sens d'avance (11) au travail. Etant donné que le vérin de manoeuvre (134) est un vérin à double effet, l'angle des bras de guidage (121, 122) peut être choisi avec précision, tout en laissant les disques bombés (43, 50) des structures porteuses correspondantes (36, 37, 38, 39) bout à bout et longitudinalement dans le prolongement les uns des autres. De surcroît, la longueur de la tringle (35) peut également être modifiée en fonction des angles de travail désirés par rapport à la direction de travail (11). Du reste, en pivotant le double-bras de roues (16) autour de son axe de pivotement (17A) au moyen du vérin de relevage, l'utilisateur rapproche le châssis (112) du sol, jusque dans sa position de travail, dans laquelle les roues (15) définissent la profondeur de travail des disques bombés (43, 50).

En tirant, au moyen du tracteur (2), le pulvériseur (101) suivant le sens d'avance (11) au travail, les disques bombés (43, 50) sont entraînés par le sol. Les disques bombés (43, 50) de la première rangée (première paire) de structures porteuses (36, 37) tournent la terre dans un sens, tandis que les disques bombés (43, 50) de la deuxième rangée (deuxième paire) de structures porteuses (38, 39) retournent la terre dans l'autre sens afin d'obtenir un bon mélange de la terre avec les résidus végétaux. Compte tenu du fait que les disques bombés (43, 50) s'étendent obliquement par rapport à la direction de travail (11), il peut arriver que le pulvériseur (101) ait tendance à dévier de la direction de travail (11). Pour y remédier, l'utilisateur peut agir, au moyen du vérin de positionnement (9), sur le timon secondaire (6), afin de maintenir le corps (104) dans la direction de travail (11).

Après le travail, le pulvériseur (101) peut aisément être replacé dans sa position de transport en agissant successivement sur le vérin de relevage, le vérin de manoeuvre (134) et les vérins de mise en position (49).

Finalement, différentes modifications restent possibles, notamment en ce qui concerne la constitution des divers éléments ou par substitution d'équivalents techniques, sans pour autant sortir du domaine de protection défini dans les revendications.

## Revendications

1. Machine agricole de travail du sol comportant :
- un châssis (112) avec un bâti (20) et un bras de guidage (121) lié au bâti (20) au moyen d'une articulation (132) d'axe de pivotement (132A) dirigé vers le haut,
- un dispositif de liaison (3) servant à lier ledit châssis (112) à un véhicule moteur (2),
- une paire de structures porteuses (36, 37) supportant chacune un groupe d'outils de travail du sol (40) et liées chacune audit châssis (112) au moyen d'une articulation (45) respective d'axe de pivotement (45A) dirigé vers le haut, l'une (37) d'entre elles étant plus précisément liée audit bras de guidage (121) au moyen de son articulation (45) respective, de sorte que lesdites structures porteuses (36, 37) puissent être pivotées autour de leur axe de pivotement (45A) respectif d'une position de transport dans laquelle ladite machine agricole de travail du sol (101) présente une largeur de transport réduite, dans une position de travail dans laquelle les groupes d'outils de travail du sol (40) de ladite paire de structures porteuses (36, 37) s'étendent bout à bout et longitudinalement dans le prolongement l'un de l'autre et vice versa,
***caractérisée en ce*** que :
- l'autre structure porteuse (36) de ladite paire de structures porteuses (36, 37) est liée au bâti (20) au moyen de son articulation (45) respective, et
- l'axe de pivotement (132A) de l'articulation (132) liant le bras de guidage (121) au bâti (20) est confondu avec l'axe de pivotement (45A) de ladite articulation (45) liant l'autre structure porteuse (36) audit bâti (20).

2. Machine agricole de travail du sol selon la revendication 1, ***caractérisée en ce*** que les deux structures porteuses (36, 37) de ladite paire peuvent être pivotées par rapport au bras de guidage (121) autour de l'axe de pivotement (45A) de leur articulation (45) respective, au moyen d'au moins un élément de mise en position (49) commandé depuis le véhicule moteur (2).

3. Machine agricole de travail du sol selon la revendication 2, ***caractérisée en ce*** que le pivotement des deux structures porteuses (36, 37) de ladite paire autour de l'axe de pivotement (45A) de leur articulation (45) respective s'effectue au moyen d'un seul élément de mise en position (49).

4. Machine agricole de travail du sol selon l'une quelconque des revendications 1 à 3, ***caractérisée en ce*** que le bras de guidage (121) peut être pivoté par rapport au bâti (20) autour de son axe de pivotement (132A) d'une position de transport dans une position de travail et vice versa au moyen d'au moins un organe de manoeuvre (134) commandé depuis le véhicule moteur (2).

5. Machine agricole de travail du sol selon l'une quelconque des revendications 1 à 4, ***caractérisée en ce*** :
- que le châssis (112) comporte un bras de guidage supplémentaire (122) lié au bâti (20) au moyen d'une articulation (133) d'axe de pivotement (133A) dirigé vers le haut ;
- qu'elle comporte également une paire de structures porteuses supplémentaires (38, 39) supportant chacune un groupe d'outils de travail du sol (40), dont l'une (38) est liée audit bras de guidage supplémentaire (122) au moyen d'une articulation (45) respective d'axe de pivotement (45A) dirigé vers le haut et dont l'autre (39) est liée au bâti (20) du châssis (112) au moyen d'une articulation (45) respective d'axe de pivotement (45A) également dirigé vers le haut et confondu avec l'axe de pivotement (133A) de l'articulation (133) liant le bras de guidage supplémentaire (122) au bâti (20), de sorte que lesdites structures porteuses supplémentaires (38, 39) puissent être pivotées autour de leur axe de pivotement (45A) respectif d'une position de transport dans laquelle ladite machine agricole de travail du sol (101) présente une largeur de transport réduite, dans une position de travail dans laquelle les groupes d'outils de travail du sol (40) de ladite paire de structures porteuses supplémentaires (38, 39) s'étendent bout à bout et longitudinalement dans le prolongement l'un de l'autre, et vice versa, ladite paire de structures porteuses supplémentaires (38, 39) étant décalée, suivant la direction d'avance (11) au travail, par rapport à la première paire de structures porteuses (36, 37).

6. Machine agricole de travail du sol selon la revendication 5, ***caractérisée en ce*** que les deux structures porteuses supplémentaires (38, 39) de ladite paire supplémentaire peuvent être pivotées par rapport au bras de guidage supplémentaire (122) autour de l'axe de pivotement (45A) de leur articulation (45) respective au moyen d'au moins un élément de mise en position (49) commandé depuis le véhicule moteur (2).

7. Machine agricole de travail du sol selon la revendication 6, ***caractérisée en ce*** que le pivotement des deux structures porteuses supplémentaires (38, 39) de ladite paire supplémentaire autour de l'axe de pivotement (45A) de leur articulation (45) respective s'effectue au moyen d'un seul élément de mise en position (49).

8. Machine agricole de travail du sol selon l'une des revendications 5 à 7, ***caractérisée en ce*** que le bras de guidage supplémentaire (122) peut être pivoté par rapport au bâti (20) autour de son axe de pivotement (133A) d'une position de transport dans une position de travail et vice versa au moyen d'au moins un organe de manoeuvre (134) commandé depuis le véhicule moteur (2).

9. Machine agricole de travail du sol selon les revendications 4 et 8, ***caractérisée en ce*** que l'organe de manoeuvre (134) est implanté entre le bras de guidage (121) et le bâti (20), et qu'un élément de manoeuvre (35) s'étend entre ledit bras de guidage (121) et le bras de guidage supplémentaire (122), ou vice versa.

10. Machine agricole de travail du sol selon la revendication 9, ***caracterisée en ce*** que la longueur de l'élément de manoeuvre (35) est réglable.

11. Machine agricole de travail du sol selon l'une quelconque des revendications 1 à 10, ***caractérisée en ce*** que les groupes d'outils de travail du sol (40) de chaque structure porteuse (36, 37) et, le cas échéant, de chaque structure porteuse supplémentaire (38, 39) comportent un arbre central muni de disques bombés (43, 50).

12. Machine agricole de travail du sol selon l'une quelconque des revendications 1 à 11, ***caractérisée en ce*** que, dans leur position de transport, les structures porteuses (36, 37) et, le cas échéant, les structures porteuses supplémentaires (38, 39) s'étendent au moins sensiblement suivant la direction de transport (11').

13. Machine agricole de travail du sol selon l'une quelconque des revendications 1 à 12, ***caractérisée en ce*** que c'est un pulvériseur.

14. Machine agricole de travail du sol selon la revendication 13, ***caractérisée en ce*** que c'est un pulvériseur en 〈〈 V 〉〉.

## Claims

1. Agricultural machine for working the soil, including:
- a chassis (112) with a flame (20) and a guide arm (121) connected to the flame (20) by means of an articulation (132) with its axis of pivoting (132A) pointing upwards,
- a connection device (3) serving to connect the said chassis (112) to a motor vehicle (2),
- a pair of supporting structures (36, 37) each one supporting a group of soil-working tools (40) and each one connected to the said chassis (112) by means of a respective articulation (45) with its axis of pivoting (45A) pointing upwards, one (37) of these being more specifically connected to the said guide arm (121) by means of its respective articulation (45) in such a way that the said supporting structures (36, 37) can be pivoted about their respective axis of pivoting (45A) from a transport position in which the said agricultural soil-working machine (101) has a reduced transport width, into a work position in which the groups of soil-working tools (40) of the said parr of supporting structures (36, 37) extend end to end and longitudinally in line with one another and vice versa,
***characterized in*** that:
- the other supporting structure (36) of the said pair of supporting structures (36, 37) is connected to the flame (20) by means of its respective articulation (45) and
- the axis of pivoting (132A) of the articulation (132) connecting the guide arm (121) to the flame (20) is coincident with the axis of pivoting (45A) of the said articulation (45) connecting the other supporting structure (36) to the said flame (20).

2. Agricultural soil-working machine according to Claim 1, ***characterized in*** that the two supporting structures (36, 37) of the said pair can be pivoted with respect to the guide arm (121) about the axis of pivoting (45A) of their respective articulation (45) by means of at least one positioning element (49) controlled from the motor vehicle (2).

3. Agricultural soil-working machine according to Claim 2, ***characterized in*** that the pivoting of the two supporting structures (36, 37) of the said pair about the axis of pivoting (45A) of their respective articulation (45) is achieved by means of a single positioning element (49).

4. Agricultural soil-working machine according to any one of Claims 1 to 3, ***characterized in*** that the guide arm (121) can be pivoted with respect to the flame (20) about its axis of pivoting (132A) from a transport position into a work position and vice versa by means of at least one operating member (134) controlled from the motor vehicle (2).

5. Agricultural soil-working machine according to any one of Claims 1 to 4, ***characterized in*** that:
- the chassis (112) includes an additional guide arm (122) connected to the flame (20) by means of an articulation (133) with its axis of pivoting (133A) pointing upwards;
- it also includes a pair of additional supporting structures (38, 39) each one supporting a group of soil-working tools (40), one (38) of which is connected to the said additional guide arm (122) by means of a respective articulation (45) with its axis of pivoting (45A) pointing upwards and the other (39) of which is connected to the flame (20) of the chassis (112) by means of a respective articulation (45) with its axis of pivoting (45A) also pointing upwards and coincident with the axis of pivoting (133A) of the articulation (133) connecting the additional guide arm (122) to the flame (20) in such a way that the said additional supporting structures (38, 39) can be pivoted about their respective axis of pivoting (45A) from a transport position in which the said agricultural soil-working machine (101) has a reduced transport width into a work position in which the groups of soil-working tools (40) of the said pair of additional supporting structures (38, 39) extend end to end and longitudinally in line with one another, and vice versa, the said pair of additional supporting structures (38, 39) being offset in the direction of travel (11) during work with respect to the first pair of supporting structures (36, 37).

6. Agricultural soil-working machine according to Claim 5, ***characterized in*** that the two additional supporting structures (38, 39) of the said additional pair can be pivoted with respect to the additional guide arm (122) about the axis of pivoting (45A) of their respective articulation (45) by means of at least one positioning element (49) controlled from the motor vehicle (2).

7. Agricultural soil-working machine according to Claim 6, ***characterized in*** that the pivoting of the two additional supporting structures (38, 39) of the said additional pair about the axis of pivoting (45A) of their respective articulation (45) is achieved by means of a single positioning element (49).

8. Agricultural soil-working machine according to one of claims 5 to 7, ***characterized in*** that the additional guide arm (122) can be pivoted with respect to the flame (20) about its axis of pivoting (133A) from a transport position into a work position and vice versa by means of at least one operating member (134) controlled from the motor vehicle (2).

9. Agricultural soil-working machine according to claims 4 and 8, ***characterized in*** that the operating member (134) is fitted between the guide arm (121) and the flame (20), and that an operating element (35) extends between the said guide arm (121) and the additional guide arm (122) or vice versa.

10. Agricultural soil-working machine according to Claim 9, ***characterized in*** that the length of the operating element (35) is adjustable.

11. Agricultural soil-working machine according to any one of Claims 1 to 10, ***characterized in*** that the groups of soil-working tools (40) of each supporting structure (36, 37) and, as appropriate, of each additional supporting structure (38, 39) include a central shaft fitted with concave discs (43, 50).

12. Agricultural soil-working machine according to any one of Claims 1 to 11, ***characterized in*** that, in their transport position, the supporting structures (36, 37) and, as appropriate, the additional supporting structures (38, 39) extend at least substantially in the direction of transport (11').

13. Agricultural soil-working machine according to any one of Claims 1 to 12, ***characterized in*** that it is a disc-harrow.

14. Agricultural soil-working machine according to Claim 13, ***characterized in*** that it is a "V" disc-harrow.

## Patentansprüche

1. Bodenbearbeitungsmaschine, die folgendes umfaßt:
- ein Gestell (112) mit einem Rahmen (20) und einem mittels eines Gelenks (132), dessen Schwenkachse (132A) nach oben ausgerichtet ist, mit dem Rahmen (20) verbundenen Führungsarm (121),
- eine Verbindungsvorrichtung (3) zum Verbinden des Gestells (112) mit einem Motorfahrzeug (2),
- ein Paar Tragstrukturen (36, 37), die jeweils eine Gruppe von Bodenbearbeitungswerkzeugen (40) tragen und jeweils mittels eines jeweiligen Gelenks (45), dessen Schwenkachse (45A) nach oben ausgerichtet ist, mit dem Gestell (112) verbunden sind, wobei eine (37) der Tragstrukturen genauer mittels ihres jeweiligen Gelenks (45) mit dem Führungsarm (121) verbunden ist, so daß die Tragstrukturen (36, 37) um ihre jeweilige Schwenkachse (45A) aus einer Transportposition, in der die Bodenbearbeitungsmaschine (101) eine verminderte Transportbreite aufweist, in eine Arbeitsposition, in der sich die Gruppen von Bodenbearbeitungswerkzeugen (40) des Paares von Tragstrukturen (36, 37) Ende an Ende und in Längsrichtung in ihrer gegenseitigen Verlängerung erstrecken und umgekehrt, geschwenkt werden können,
***dadurch gekennzeichnet***, daß
- die andere Tragstruktur (36) des Paares von Tragstrukturen (36, 37) mittels ihres jeweiligen Gelenks (45) mit dem Rahmen (20) verbunden ist, und
- die Schwenkachse (132A) des den Führungsarm (121) mit dem Rahmen (20) verbindenden Gelenks (132) mit der Schwenkachse (45A) des die andere Tragstruktur (36) mit dem Rahmen (20) verbindenden Gelenks (45) zusammenfällt.

2. Bodenbearbeitungsmaschine nach Anspruch 1, ***dadurch gekennzeichnet***, daß die beiden Tragstrukturen (36, 37) des Paares mittels mindestens eines von dem Motorfahrzeug (2) aus gesteuerten Positionierelements (49) bezüglich des Führungsarms (121) um die Schwenkachse (45A) ihres jeweiligen Gelenks (45) geschwenkt werden können.

3. Bodenbearbeitungsmaschine nach Anspruch 2, ***dadurch gekennzeichnet***, daß das Schwenken der beiden Tragstrukturen (36, 37) des Paares um die Schwenkachse (45A) ihres jeweiligen Gelenks (45) mittels eines einzigen Positionierelements (49) erfolgt.

4. Bodenbearbeitungsmaschine nach irgend einem der Ansprüche 1 bis 3, ***dadurch gekennzeichnet***, daß der Führungsarm (121) mittels mindestens eines von dem Motorfahrzeug (2) aus gesteuerten Betätigungsglieds (134) um seine Schwenkachse (132A) bezuglich des Rahmens (20) aus einer Transportposition in eine Arbeitsposition und umgekehrt geschwerkt werden kann.

5. Bodenbearbeitungsmaschine nach irgend einem der Ansprüche 1 bis 4, ***dadurch gekennzeichnet***, daß
- das Gestell (112) einen zusätzlichen Führungsarm (122) aufweist, der mittels eines Gelenks (133), dessen Schwenkachse (133A) nach oben ausgerichtet ist, mit dem Rahmen (20) verbunden ist;
- sie des weiteren ein Paar zusätzlicher Tragstrukturen (38, 39) aufweist, die jeweils eine Gruppe von Bodenbearbeitungswerkzeugen (40) tragen, wobei die eine (38) der Tragstrukturen mittels eines jeweiligen Gelenks (45), dessen Schwenkachse (45A) nach oben ausgerichtet ist, mit dem zusätzlichen Führungsarm (122) verbunden ist, und die andere (39) mittels eines jeweiligen Gelenks (45), dessen Schwenkachse (45A) ebenfalls nach oben ausgerichtet ist und mit der Schwenkachse (133A) des den zusätzlichen Führungsarm (122) mit dem Rahmen (20) verbindenden Gelenks (133) zusammenfällt, mit dem Rahmen (20) des Gestells (112) verbunden ist, so daß die zusätzlichen Tragstrukturen (38, 39) um ihre jeweilige Schwenkachse (45A) aus einer Transportposition, in der die Bodenbearbeitungsmaschine (101) eine verminderte Transportbreite aufweist, in eine Arbeitsposition, in der sich die Gruppen von Bodenbearbeitungswerkzeugen (40) des Paares von zusätzlichen Tragstrukturen (38, 39) Ende an Ende und in Längsrichtung in ihrer gegenseitigen Verlängerung erstrecken und umgekehrt, geschwerkt werden können, wobei das Paar zusätzlicher Tragstrukturen (38, 39) im Betrieb in Fahrtrichtung (11) bezüglich des ersten Paares von Tragstrukturen (36, 37) versetzt ist.

6. Bodenbearbeitungsmaschine nach Anspruch 5, ***dadurch gekennzeichnet***, daß die beiden zusätzlichen Tragstrukturen (38, 39) des zusätzlichen Paares mittels mindestens eines vom Motorfahrzeug (2) aus gesteuerten Positionierelements (49) bezüglich des zusätzlichen Führungsarms (122) um die Schwenkachse (45A) ihres jeweiligen Gelenks (45) geschwenkt werden können.

7. Bodenbearbeitungsmaschine nach Anspruch 6, ***dadurch gekennzeichnet***, daß das Schwenken der beiden zusätzlichen Tragstrukturen (38, 39) des zusätzlichen Paares um die Schwenkachse (45A) ihres jeweiligen Gelenks (45) mittels eines einzigen Positionierelements (49) erfolgt.

8. Bodenbearbeitungsmaschine nach einem der Ansprüche 5 bis 7, ***dadurch gekennzeichnet***, daß der zusätzliche Führungsarm (122) mittels mindestens eines von dem Motorfahrzeug (2) aus gesteuerten Betätigungsglieds (134) um seine Schwenkachse (133A) bezüglich des Rahmens (20) aus einer Transportposition in eine Arbeitsposition und umgekehrt geschwenkt werden kann.

9. Bodenbearbeitungsmaschine nach den Ansprüchen 4 und 8, ***dadurch gekennzeichnet***, daß das Betätigungsglied (134) zwischen dem Führungsarm (121) und dem Rahmen (20) angeordnet ist und daß ein Betätigungselement (35) sich zwischen dem Führungsarm (121) und dem zusätzlichen Führungsarm (122), oder umgekehrt erstreckt.

10. Bodenbearbeitungsmaschine nach Anspruch 9, ***dadurch gekennzeichnet***, daß die Länge des Betätigungselements (35) verstellbar ist.

11. Bodenbearbeitungsmaschine nach irgend einem der Ansprüche 1 bis 10, ***dadurch gekennzeichnet***, daß die Gruppen von Bodenbearbeitungswerkzeugen (40) jeder Tragstruktur (36, 37) und gegebenenfalls jeder zusätzlichen Tragstruktur (38, 39) eine mittlere Welle aufweisen, die mit gewölbten Scheiben (43, 50) versehen ist.

12. Bodenbearbeitungsmaschine nach irgend einem der Ansprüche 1 bis 11, ***dadurch gekennzeichnet***, daß sich die Tragstrukturen (36, 37) und gegebenenfalls die zusätzlichen Tragstrukturen (38, 39) in ihrer Transportposition zumindest im wesentlichen in Transportrichtung (11') erstrecken.

13. Bodenbearbeitungsmaschine nach irgend einem der Ansprüche 1 bis 12, ***dadurch gekennzeichnet***, daß es sich dabei um eine Scheibenegge handelt.

14. Bodenbearbeitungsmaschine nach Anspruch 13, ***dadurch gekennzeichnet***, daß es sich dabei um eine V-förmige Scheibenegge handelt.
